# EUROPÄISCHE PATENTANMELDUNG

(11) **EP 0 521 319 A1**
(43) Veröffentlichungstag der Anmeldung: **07.01.1993**
(21) Anmeldenummer: 92109791.1
(22) Anmeldetag: 11.06.1992
(51) Int. Cl.: C22C 9/02, C22C 9/06

(54) **Kupfer-Nickel-Zinn-Legierung, Verfahren zu ihrer Behandlung sowie ihre Verwendung**

(30) Priorität: 03.07.1991 DE 4121994
(71) Anmelder: WIELAND-WERKE AG, D-89079 Ulm (DE)
(72) Erfinder: Bögel, Andreas, Dr., W-7913 Senden (DE)

(57) **Zusammenfassung**

Die Erfindung betrifft eine Kupfer-Nickel-Zinn-Legierung, bestehend aus:

| | |
|---|---|
| 4 - 8 % | Nickel, |
| 4 - 8 % | Zinn, |
| 0,005 - 1,0 % | Zink, |
| 0,005 - 0,5 % | Eisen, |
| 0,005 - 1,0 % | Blei, |

Rest Kupfer und übliche Verunreinigungen.

Die Legierung weist einen besonderen Gefügezustand mit folgenden Eigenschaften auf:
a) er enthält eine zeilige Vorzugsorientierung,
b) er entält folgende Gefügebestandteile,
   b₁) bis 100 Volumen % diskontinuierliche Ausscheidungen (A),
   b₂) bis 100 Volumen % kontinuierliche Ausscheidungen,
   b₃) bis 15 Volumen % hoch Zinn- und Nickelhaltiger Gefügebereiche (GSnNi),
   b₄) bis 15 Volumen % hoch Zinn-haltiger Gefügebereiche (GSn),
   b₅) bis 3 Volumen % einer hoch Blei-haltigen Phase und
   b₆) Rest Kupfer-Mischkristall. (Fig. 1)
Die Legierung wird vorzugsweise als Gleitlagerwerkstoff verwendet.

## Beschreibung

Die Erfindung betrifft eine Kupfer-Nickel-Zinn-Legierung mit einem besonderen Gefügezustand, ein Verfahren zur Einstellung dieses Gefügezustandes sowie ihre Verwendung.

Es besteht ein großer Bedarf an Kupferlegierungen für Gleitlagerwerkstoffe.
Von einem guten Gleitlagerwerkstoff werden u.a. folgende Eigenschaften verlangt:
Hohe Verschleißfestigkeit, gute Notlaufeigenschaften, gute Gleiteigenschaften, hohe Belastbarkeit, hohe Wechselfestigkeit, gute Einbettfähigkeit, gute Korrosionsbeständigkeit und geringe Neigung zum Verschweißen.
Als Gleitlagerwerkstoff wurden bisher u.a. Zinnbronze (beispielsweise CuSn8) oder Sondermessinge (beispielsweise CuZn31Si1, CuZn40Al2) eingesetzt. Die gestellten Forderungen lassen sich jedoch nicht mit einem einzigen Werkstoff verwirklichen.

Der Erfindung liegt daher die Aufgabe zugrunde, eine Kupferlegierung vorzuschlagen, die insbesondere für den erwähnten Verwendungszweck eine besonders günstige Eigenschaftkombination aufweist.

Die Aufgabe wird erfindungsgemäß durch eine Kupfer-Nickel-Zinn-Legierung gelöst, die aus

| | |
|---|---|
| 4 - 8 % | Nickel, |
| 4 - 8 % | Zinn, |
| 0,005 - 1,0 % | Zink, |
| 0,005 - 0,5 % | Eisen, |
| 0,005 - 1,0 % | Blei, |

Rest Kupfer und übliche Verunreinigungen besteht (die Prozentangaben beziehen sich auf das Gewicht), wobei sie einen mehrphasigen Gefügezustand mit folgenden Eigenschaften aufweist:
a) er enthält eine zeilige Vorzugsorientierung,
b) er enthält folgende Gefügebestandteile,
   b₁) bis 100 Volumen % diskontinuierliche Ausscheidungen (A),
   b₂) bis 100 Volumen % kontinuierliche Ausscheidungen,
   b₃) bis 15 Vol.% hoch Zinn- und Nickelhaltiger Gefügebereiche (GSnNi), deren Zinn- und Nickelgehalt die Kupfermischkristallzusammensetzung wenigstens um das Doppelte übertreffen und typischerweise durch die Summenformel CuNi17Sn40 charakterisiert werden können,
   b₄) bis 15 Vol.% hoch Zinn- haltiger Gefügebereiche (GSn), deren Zinngehalte die Kupfermischkristallzusammensetzung wenigstens um das Doppelte übertreffen und typischerweise durch die Summenformel CuNi6Sn14 charakterisiert werden können,
   b₅) bis 3 Volumen % einer hoch Blei-haltigen Phase und
   b₆) Rest Kupfer-Mischkristall.

Die zeilige Vorzugsorientierung soll dann vorliegen, wenn bei 50-facher Vergrößerung in einem Schliffbild mit einer geeigneten Schlifflage (Längs- oder Querschliff oder eine beliebige andere Orientierung zu den freien Achsen des Probenkörpers) für zusammenhängende Gefügebereiche in der Bildebene das Verhältnis der mittleren größten Längen zu den mittleren größten Breiten wenigstens 2 beträgt oder bei ausgebildetem Korn das Verhältnis der mittleren größten Kornabmessung zur mittleren kleinsten Kornabmessung wenigstens 2 beträgt und die durch die größten Längen vorgegebenen mittleren Richtungen für wenigstens zwei Gefügebereiche nicht mehr als 45° voneinander abweichen.

Die kontinuierliche und diskontinuierliche Ausscheidung beruht auf der Bildung eine neuen Phase, die in der Literatur üblicherweise als " γ -Phase" bezeichnet wird.
(vgl. beispielsweise den Artikel "High-Strength Cu-Ni-Sn-Alloys by Thermomechanical Processing" von J.P. Plewes in Met. Trans. A, 6A (1975), S. 537 - 544).

Die vorgeschlagene Legierung mit dem erfindungsgemäßen Gefügezustand weist günstige Eigenschaftskombinationen hinsichtlich Zugfestigkeit Rₘ (mindestens 450 MPa), Druckfestigkeit σ_{d10} (mindestens 500 MPa), Härte (mindestens 170 HB), Wärmeleitfähigkeit, charakterisiert durch eine elektrische Leitfähigkeit von mindestens 7,0 MS/m, sowie Standzeit auf.

Die Zusammensetzung der Kupfer-Nickel-Zinn-Legierung als solche ist zwar beispielsweise aus der US-PS 1.816.509 bekannt, jedoch nicht der erfindungsgemäße Gefügezustand. Auch werden Gußwerkstoffe solcher Zusammensetzungen für Gleitlageranwendungen vorgeschlagen, aber die Bedeutung der Einstellung des erfindungsgemäßen Gefügestandes für die extreme Verlängerung der Standzeiten beim Einsatz als Gleitlager, insbesondere bei Belastungen im Mischreibungsgebiet, wurde bisher nicht erkannt.

Eisenzusätze in der angegebenen Menge zur Grundzusammensetzung aus Kupfer, Nickel und Zinn dienen der Kornfeinung, während die Zinkzusätze vor allem die Bildung von CuNi17Sn40 und CuNi6Sn14 (Gefügebereiche GSnNi und GSn) während der Erstarrung begünstigen.

Die Gegenwart der beim Erstarrungsprozeß von der Bruttozusammensetzung stark abweichender Phasen werden üblicherweise als qualitätsmindernde Seigerungen verstanden. Im vorliegenden Fall zeigte sich jedoch erstaunlicherweise, daß die durch eine unvollständige Homogenisierung erhalten gebliebenen Seigerungen durch ihre höhere Härte zusätzliche Traganteile im Gefüge bilden und die Standzeit bei erfindungsgemäßer Einstellung des Gesamtgefüges positiv beeinflussen.

Bleizusätze in der angegebenen Menge zur Grundzusammensetzung sind wünschenswert, um insbesondere eine Verbesserung der Zerspanbarkeit zu erzielen.
Weitere bevorzugte Ausbildungen des Gefügezustandes der Kupfer-Nickel-Zinn-Legierungen ergeben sich aus den Ansprüchen 2 - 12. Die erfindungsgemäßen Kupfer-Nickel-Zinn-Legierungen lassen sich in üblicher Weise verarbeiten.

Die Gefügebereiche GSnNi und GSn werden vorzugsweise beim Erstarrungsprozeß gebildet.

Zur Einstellung der Gefügebereiche GSnNi und GSn empfiehlt es sich, daß bei Verwendung des Stranggießverfahrens der Strang unter Einhaltung einer mittleren Erstarrungsgeschwindigkeit v ≦ 5 mm/s gegossen wird. Bei Verwendung des Kokillengusses sollte die Kupferlegierung in eine vorgewärmte Kokille gegeben werden, um das mittlere v unter 5 mm/s zu halten.

Zur Einstellung der diskontinuierlichen Ausscheidungen (A) empfiehlt es sich, die Legierung nach dem Gießen und Durchführung der üblichen Verfahrensschritte Erwärmen, Warm- und Kaltumformung im Anschluß an den letzten Kaltverformungsschritt für etwa 10 Minuten bis 50 Stunden einer Wärmebehandlung bei einer Temperatur zwischen 300 und 450°C zu unterziehen, wobei die Haltezeiten vorzugsweise zwischen 2 und 6 Stunden liegen.

Aufgrund der geschilderten Vorteile wird die Kufper-Nickel-Zinn-Legierung vorzugsweise als Gleitlagerwerkstoff verwendet. Durch die Einstellung des zeiligverstreckten Gefügezustandes mit verschieden harten Bestandteilen werden die Gleiteigenschaften bei Anwendung als Gleitlagerwerkstoff dann besonders günstig beeinflußt, wenn die Gleitrichtung und Vorzugsrichtung des zeiligverstreckten Gefügezustandes in etwa senkrecht zueinander verlaufen. Hierdurch wird der Erosion des Wellenwerkstoffes vorgebeugt und die Ausbildung mikroskopischer Bereiche mit überwiegend hydrodynamischer Schmierung an Orten der Zeilen mit weicheren Gefügebestandteilen stark begünstigt. Ein Materialübertrag auf den Wellenwerkstoff (Verschweißen) wird hierdurch praktisch vollständig verhindert.
Zudem werden die Notlaufeigenschaften verbessert, da wegen des Bleizusatzes eine Mindestmenge durch Tribooxidation gebildeten Bleioxides zur Verfügung steht.

Die Erfindung wird anhand des folgenden Ausführungsbeispiels näher erläutert:

### Ausführungsbeispiel

Es wurden Gußbolzen, bestehend aus 6,1 Gew.% Nickel, 5,7 Gew.% Zinn, 0,02 Gew.% Zink, 0,01 Gew.% Eisen, 0,01 Gew.% Blei, Rest Kupfer und unvermeidbare Verunreinigungen, durch Kokillenguß hergestellt und bei 700°C thermisch entspannt. Nach spanender Bearbeitung wurden die Bolzen bei 860°C zu Rohren der Abmessung 48 x 4 mm stranggepreßt. Nach Kaltumformung um etwa 40% relativer Umformung an die Rohrabmessung 35 x 3 mm und dreistündiger Wärmebehandlung bei 360°C standen für die Herstellung von Gleitlagerbuchsen Vorrohre mit folgenden mechanischen Eigenschaften zur Verfügung:

| | |
|---|---|
| Zugfestigkeit | Rₘ = 670 MPa |
| Druckfestigkeit | σ_{d10} = 930 MPa |
| Brinellhärte | HB = 260 |

Die elektrische Leitfähigkeit betrug 9,0 MS/m.

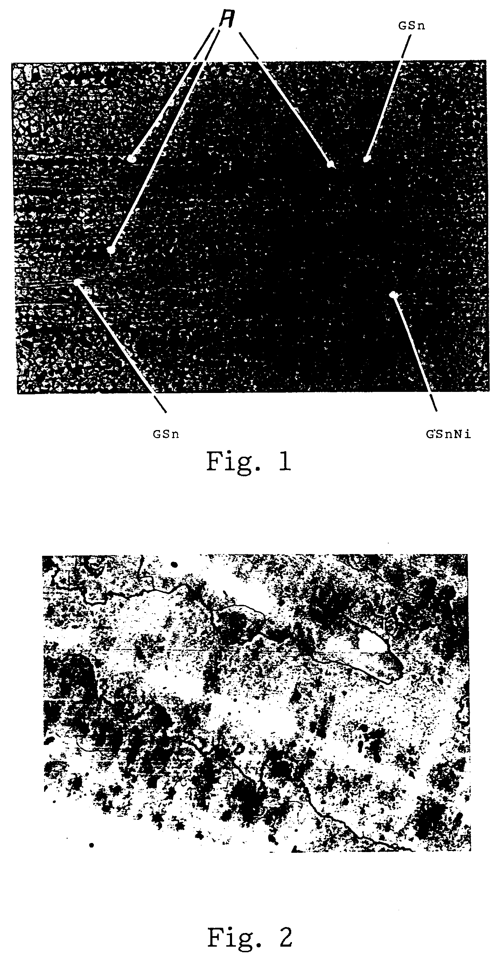

Das Schliffbild nach Fig. 1 zeigt in einer Vergrößerung 50 : 1 den erfindungsgmäßen Gefügezustand. Die diskontinuierlichen Ausscheidungen sind mit A und die hoch Zinn- und Nickel-haltigen Gefügebestandteile mit GSnNi und GSn bezeichnet.

Die Vol.-Anteile der einzelnen Gefügebestandteile wurden gemäß folgender Tabelle 1 bestimmt.

**Tabelle 1**

| Gefügebestandteil | Volumenanteil |
|---|---|
| A | 25 ± 4 Vol.-% |
| GSnNi | 2 ± 1,5 Vol.-% |
| GSn | 3 ± 2 Vol.-% |
| Bleihaltige Phase | nicht nachweisbar |
| Kupfermischkristall | 70 ± 5 Vol.-% |

Die zeilige Vozugsorientierung ist deutlich sichtbar. Das auf Seite 6 definierte Längen-Breiten-Verhältnis und der Kippwinkel sind in Tabelle 2 angegeben.

**Tabelle 2**

| Gefügebestandteil | Längen-Breiten-Verhältnis | Kippwinkel gegen die mittlere Hauptrichtung *) aller Gefügebestandteile |
|---|---|---|
| A | 6,5 : 1 | < 5° |
| GSnNi | 45 : 1 | < 5° |
| GSn | 60 : 1 | < 5° |
| Kupfermischkristall | 3,6 : 1 | < 5° |

| | | |
|---|---|---|
| (*) in Fig. 1 stimmt diese mittlere Hauptrichtung mit der Bildlängskante überein). | | |

Zum Vergleich zeigt Fig. 2 den typischen Gefügezustand eines ausgehärteten Gußwerkstoffes (HB 250) ähnlicher Zusammensetzung nach dem Stand der Technik (Vergrößerung 200 : 1).

Aus diesen Rohren wurden zum Vergleich mit marktgängigen Lagerwerkstoffen Buchsen der Abmessung 34 x 2 mm bei 20 mm Breite durch spangebende Bearbeitung hergestellt.

Die Vergleichsversuche mit gebräuchlichen Gleitlagerwerkstoffen wurden an einer Lagerprüfmaschine durchgeführt, in der das Gleitlager oszillierend zu einer feststehenden Welle bewegt wird. Über einen Hebelmechanismus kann über diese Welle eine einstellbare Belastungskraft in das zu prüfende Gleitlager geleitet werden. Im vorliegenden Fall betrug die Belastung 33,3 MPa. Es erfolgten 100 Wechsel/Minute bei einem Schwenkwinkel von ± 80°. Zur Initialschmierung dienten ca. 0,15 g eines Lithium-verseiften Schmierfettes, das im Verlauf des Versuches nicht ergänzt wurde.

Das Versuchsende ist durch das Fressen im Gleitlager erreicht, bei dem auf den Wellenzapfen ein erhöhtes Drehmoment übertragen wird, das das Abschalten der Maschine bewirkt.

Die Vergleichsversuche wurden mit Werkstoffen nach folgender Tabelle durchgeführt:

| Buchsenwerkstoff | Brinell-Härte HB |
|---|---|
| CuZn31Si | 85 |
| CuZn31Si | 142 |
| CuSn8 | 95 |
| CuSn8 | 142 |
| CuNi6Sn6 | 260 |

### Wellenwerkstoffe:

1. Stahl St37 blank:
   Brinell-Härte HB = 216
   Wellenrauhigkeit: R_{z} = 5 - 20 µm.
2. Kugellagerstahl 100Cr6:
   Rockwell-Härte C HRC = 60
   Wellenrauhigkeit: R_{z} = 2 - 5 µm.

Mit der Zusammensetzung CuNi6Sn6 im erfindungsgemäßen Gefügezustand ergab sich bei Verwendung der beiden o.g. Wellenwerkstoffe gegenüber den anderen Lagerwerkstoffen eine Erhöhung der Lebensdauer des Gleitlagers mindestens um den Faktor 10 und eine Herabsetzung der Lagertemperatur in der Betriebsphase um ca. 50°C.

## Patentansprüche

1. Kupfer-Nickel-Zinn-Legierung, bestehend aus
| | |
|---|---|
| 4 - 8 % | Nickel, |
| 4 - 8 % | Zinn, |
| 0,005 - 1,0 % | Zink, |
| 0,005 - 0,5 % | Eisen, |
| 0,005 - 1,0 % | Blei, |
Rest Kupfer und übliche Verunreinigungen,
dadurch gekennzeichnet,
daß sie einen mehrphasigen Gefügezustand mit folgenden Eigenschaften aufweist:
a) er enthält eine zeilige Vorzugsorientierung,
b) er enthält folgende Gefügebestandteile,
b₁) bis 100 Volumen % diskontinuierliche Ausscheidungen (A),
b₂) bis 100 Volumen % kontinuierliche Ausscheidungen,
b₃) bis 15 Volumen % hoch Zinn- und Nickelhaltiger Gefügebereiche (GSnNi), deren Zinn- und Nickelgehalt die Kupfermischkristallzusammensetzung wenigstens um das Doppelte übertreffen und typischerweise durch die Summenformel CuNi17Sn40 charakterisiert werden können,
b₄) bis 15 Volumen % hoch Zinn- haltiger Gefügebereiche (GSn), deren Zinngehalte die Kupfermischkristallzusammensetzung wenigstens um das Doppelte übertreffen und typischerweise durch die Summenformel CuNi6Sn14 charakterisiert werden können,
b₅) bis 3 Volumen % einer hoch Blei-haltigen Phase und
b₆) Rest Kupfer-Mischkristall.

2. Kupferlegierung nach Anspruch 1,
dadurch gekennzeichnet,
daß der Gefügezustand 5 - 30 Vol.% diskontinuierliche Ausscheidungen (A) enthält.

3. Kupferlegierung nach Anspruch 1 oder 2,
dadurch gekennzeichnet,
daß der Gefügezustand bis 50 Vol.% kontinuierliche Ausscheidungen enthält.

4. Kupferlegierung nach einem oder mehreren der Ansprüche 1 - 3,
dadurch gekennzeichnet,
daß der Gefügezustand bis 5 Vol.% der hoch Zinn- und Nickel-haltigen Gefügebereiche (GSnNi) enthält.

5. Kupferlegierung nach Anspruch 4,
dadruch gekennzeichnet,
daß der Gefügezustand bis 1 Vol.% der hoch Zinn- und Nickel-haltigen Gefügebereiche (GSnNi) enthält.

6. Kupferlegierung nach einem oder mehreren der Ansprüche 1 - 5,
dadurch gekennzeichnet,
daß der Gefügezustand bis 5 Vol.% der hoch Zinn-haltigen Gefügebereiche (GSn) enthält.

7. Kupferlegierung nach Anspruch 6,
dadurch gekennzeichnet,
daß der Gefügezustand bis 1 Vol.% der hoch Zinn-haltigen Gefügebereiche (GSn) enthält.

8. Kupferlegierung nach einem oder mehreren der Ansprüche 1 - 7,
dadurch gekennzeichnet,
daß der Gefügezustand bis 1 Vol.% der hoch Blei-haltigen Phase enthält.

9. Kupferlegierung nach Anspruch 8,
dadurch gekennzeichnet,
daß der Gefügezustand bis 0,5 Vol.% der hoch Blei-haltigen Phase enthält.

10. Kupferlegierung nach einem oder mehreren der Ansprüche 1 - 9,
dadurch gekennzeichnet,
daß der Nickelgehalt bis zur Hälfte durch Kobalt oder Mangan oder eine Kombination beider Elemente ersetzt ist.

11. Kupferlegierung nach einem oder mehreren der Ansprüche 1 - 10,
dadurch gekennzeichnet,
daß der Zinngehalt bis zur Hälfte durch Indium oder Gallium oder eine Kombination beider Elemente ersetzt ist.

12. Kupferlegierung nach einem oder mehreren der Ansprüche 1 - 11,
dadurch gekennzeichnet,
daß sie 0,005 - 0,1 % Phosphor enthält.

13. Verfahren zur Einstellung der Gefügebereiche (GSnNi) und (GSn) bei einer Kupferlegierung nach einem oder mehreren der Ansprüche 1 - 12,
dadurch gekennzeichnet,
daß die Gefügebereiche (GSnNi) und (GSn) beim Erstarrungsprozeß gebildet werden.

14. Verfahren nach Anspruch 13,
dadurch gekennzeichnet,
daß bei Verwendung des Stranggießverfahrens der Strang unter Einhaltung einer mittleren Erstarrungsgeschwindigkeit v ≦ 5 mm/s gegossen wird.

15. Verfahren nach Anspruch 13,
dadurch gekennzeichnet,
daß bei Verwendung des Kokillengusses die Legierung in eine vorgewärmte Kokille gegeben wird, so daß die mittlere Erstarrungsgeschwindigkeit v 5 mm/s nicht übersteigt.

16. Verfahren zur Einstellung der diskontiniuierlichen Ausscheidungen (A) bei einer Kupferlegierung nach einem oder mehreren der Ansprüche 1 - 12, wobei die Legierung nach dem Gießen erwärmt, warm- und kaltverformt wird,
dadurch gekennzeichnet,
daß die Legierung nach der letzten Kaltumformung eine Wärmebehandlung bei einer Temperatur zwischen 300 und 450°C für etwa 10 Minuten bis 50 Stunden erfährt.

17. Verfahren nach Anspruch 16,
dadurch gekennzeichnet,
daß die Haltezeiten bei der Wärmebehandlung 2 - 6 Stunden betragen.

18. Verwendung einer Kupferlegierung nach einem oder mehreren der Ansprüche 1 - 12 als Gleitlagerwerkstoff.

19. Verwendung einer Kupferlegierung nach einem oder mehreren der Ansprüche 1 - 12 als Gleitlagerwerkstoff, bei dem die Gleitrichtung in etwa senkrecht zur zeiligen Vorzugsorientierung des Gefügezustandes verläuft.
